# EUROPEAN PATENT SPECIFICATION

(11) **EP 2 773 078 B1**
(45) Date of publication and mention of the grant of the patent: **07.06.2017**
(21) Application number: 13382068.8
(22) Date of filing: 01.03.2013
(51) Int. Cl.: H04L 29/06, H04N 21/60

(54) **METHOD, SYSTEM AND DEVICES FOR MULTIMEDIA CONTENT DELIVERY USING ADAPTIVE STREAMING**
VERFAHREN, SYSTEM UND VORRICHTUNG ZUR MULTIMEDIAINHALTLIEFERUNG MITTELS ADAPTIVEM STREAMING
PROCÉDÉ, SYSTÈME ET DISPOSITIFS DE DISTRIBUTION DE CONTENU MULTIMÉDIA À L'AIDE DE DIFFUSION EN CONTINU ADAPTATIVE

(43) Date of publication of application: 03.09.2014
(73) Proprietor: Alcatel-Lucent España, 28050 Madrid (ES)
(72) Inventor: Villegas Nunez, Alvaro, 28050 Madrid (ES); Kisel, Andrey, Maidenhead, SL6 2PJ (GB); Niven-Jenkins, Benjamin, Cambrigde, CB24 6DD (GB)
(74) Representative: Berthier, Karine

(56) References cited:
- WO-A1-2004/088501
- US-A1- 2004 184 432
- US-A1- 2012 005 365

## Description

### BACKGROUND OF THE INVENTION

### Technical field

The present invention relates to the delivery of multimedia contents (e.g., text, audio, video, software, etc., and any combination of them) which use an adaptive streaming format in communications networks. More particularly, present invention relates to unidirectional delivery in a content delivery network (CDN).

### Description of related art

A content delivery network or content distribution network (CDN) is a system of computers containing copies of data placed at various nodes of a network. When properly designed and implemented, a CDN can improve access to the data it caches by placing a number of copies closer to end users resulting in increased access bandwidth to the data, better scaling, resiliency and reduced latency. CDN contains delivery servers (often also referred to as surrogate server, edge node, edge cache or just cache, and specified in RFC 3040 by IETF) with copies of multimedia, positioned at various network points so as to achieve optimal bandwidth and network utilization for clients accessing to the multimedia. Multimedia includes, but not limited to live and on-demand content. Data or media content types often cached in CDNs include multimedia objects (audio and video objects), web objects (text, graphics, URLs and scripts), downloadable objects (media files, software, documents), applications, live media (events), and database queries. Caching content means that data are stored in an edge cache (i.e., a block of memory inside surrogate server for temporary storage of data likely to be used) so that future requests for that content can be served faster from a location closer to the consumer.

Growing volume of online live events and live channels require cost-efficient CDN scaling to deliver them. The scaling becomes even more crucial with the broad adoption of adaptive streaming technologies.

Adaptive (bit-rate) streaming is a solution by which video or other content is divided into fragments or segments, and where different resolutions or quality levels for each video fragment or segment are made available by a server. A client continuously monitors the amount of bandwidth available. By requesting segments one after the other at possibly different quality resolutions, this can result in a smooth video experience even though the bandwidth varies.

Note that in this context, the expresions "media segment" and "media object" are used interchangeably.

HTTP (Hypertext Transfer Protocol) is the common protocol for the delivery or adaptive delivery of live events and channels online to consumer devices.

HTTP adaptive streaming (HAS) is the generic term for various methods of adaptive bit-rate streaming over HTTP, commonly used for delivering live and on-demand multimedia over IP networks. Service providers and network operators deploy HAS as a feature of content delivery networks (CDNs) to provide uninterrupted QoE for the subscribers in networks with fluctuating bandwidth, and to reach broad population of retail connected devices that support HAS 'off the shelf'.

HAS formats for multimedia content delivery are currently being developed under Motion Pictures Experts Group (MPEG) with different profiles as Dynamic Adaptive Streaming over HTTP (DASH), other HAS formats include Apple Live Streaming (HLS), Adobe HTTP Dynamic Streaming (HDS), and Microsoft Smooth Streaming for Silverlight. Adaptive streaming typically encodes video/audio into multiple bit-rate formats using common video/audio codecs such as H.264/AAC. The audio/video is then fragmented and stored in short media files or single fragmented file for multiple bit-rates. The rules for the player to retrieve file segments are kept in a manifest file.

In the past, common video streaming technologies used unidirectional delivery that did not require setting a transmission channel for guaranteed delivery between the server and the client, for example Real Time Streaming Protocol (RTSP) over User Datagram Protocol (UDP). Unidirectional delivery does not provide a return path from the client to the server for confirming receipt of the transmitted data and therefore, it was unreliable. Reliability was either not crucial or provided at the application layer, for example, using retransmission (RET) or forward error correction (FEC) technique.

On the contrary, modern HAS uses reliable delivery that requires prior setting up of a communication channel (return path for confirming receipt of the transmitted data) between the server and the client, for example, HTTP protocol over Transmission Control Protocol (TCP) is used almost everywhere. There is a number of factors underpinning broad HAS adoption, among others: TCP is a reliable protocol whose higher overhead with respect to UDP can now be absorbed by the increased available bandwidth in the networks, HTTP is universally available and free of NAT (Network Address Translation or firewall issues, web caching technology (CDNs) can be leveraged for the delivery, bitrate adaptation is appropriate for unmanaged networks.

Some known prior art solutions for content delivery based on HAS, which use a reliable, ordered delivery of adaptive streaming segments, requires setting up a communication channel between the client and the server. For example, HTTP over TCP is used almost everywhere. The required communication channel setup generates delays due to TCP slow start and the time for the client to acquire several segments to start playout. In addition, these delays create latency.

Prior art document WO 2004/088501 A1 provides a system and method for media streaming via UDP or TCP protocols wherein the server controller and the client controller cooperate in order to determine a suitable pacing rate and the best media segment sizes to be transmitted when network conditions change. Although HAS enables uninterrupted quality of experience, HAS creates delivery challenges. Besides network level challenges, adaptive delivery introduces application level challenges when multiple adaptive delivery clients compete at home for the bigger slice of available bandwidth. Prior art delivers media at a rate to fill maximum available bandwidth because TCP protocol is designed to saturate all available bandwidth. Since the clients at home are not aware about each other, their competition may result in adaptive application for small screen devices acquiring bigger bandwidth than applications for larger screens, e.g. iPad may get bigger bandwidth than large-screen TV.

Prior art document US 2012/005365 A1 provides a system and method for media streaming in which the legacy client controller is enabled to calculate the available bandwidth and dynamically change the encoded delivery rate of the received media. Such a client can works with standard HTTP servers or with adaptive HTTP streaming servers. Another prior art solution allows the introduction of HAS for legacy devices and achieve coexistence of the traditional pay-TV model (e.g. using RTSP video servers and unidirectional delivery over UDP) with new OTT connected devices (e.g. using HTTP Web servers and CDN delivery over TCP) by simply overlaying both delivery platforms: live channels are delivered both through multicast and HAS (through the CDN), and on demand content is prepared and propagated twice, in the legacy format required by Video Servers (RTSP/UDP) and in HAS format, propagated again by CDNs (HTTP/TCP). Each type of terminal (legacy cable/IPTV STB or HTP/HAS enabled connected devices) will request the content to the appropriate server (CDN, video server or multicast address).

Commonly end terminals (such as cable or PTV STBs) are provided by the service providers, being the largest component in their CAPEX investment and especially costly to replace. The drawback of this solution is obviously the cost of implementing two complete chains in parallel for the delivery of content.

An alternative solution to introduce HAS for legacy devices is a software upgrade in legacy boxes to implement a full HAS client, and try using the CDN and HAS content as the only delivery mechanism. However, this approach is unfeasible in most real-life cases due to extra resource requirements on clients to support HAS, e.g. while most of legacy clients can implement a HAS software stack, the buffering capabilities, memory and/or storage are often insufficient.

Summarizing, there are several shortcomings of the prior art solutions:
- Slow start of data transmission over bi-directional communication channel, e.g. TCP slow start.
   - Initial segment(s) acquisition to start client play-out resulting in increased latency and degraded experience compared with broadcast, IPTV or cable systems.
   - Different adaptive clients at home compete for fluctuating bandwidth (BW) increasing fluctuations and potentially leading to smaller screens getting bigger BW than TVs.
   - The abovementioned limitations become more pronounced for multi-device home and larger screens as users expect cable or IPTV level quality of experience (QoE) for premium entertainment on large screens.
   - A simple software upgrade to move legacy terminals to reliable adaptive delivery is often not possible due to the much higher requirements of HAS, for example, substantially larger buffering is required with respect to the legacy unidirectional, non-adaptive delivery models. In addition HTTP uses reliable delivery over TCP, which is different from unidirectional delivery (e.g. RTSP/UDP) and often already deployed infrastructure cannot be leveraged.

Therefore, there is a need of optimising the delivery technique for adaptive streaming in order to overcome the limitations of existing prior art solutions, providing a solution which enables better arbitration of bandwidth during delivery to multi-device home and can be applied to leverage HAS clients on legacy devices with smaller buffers, as well as on new retail connected devices in CDNs.

### SUMMARY

In light of the present need for providing a method and system for delivering multimedia in a CDN which overcome the aforementioned drawbacks of HAS QoE and also enable an early transition to HAS technology, servicing the legacy devices without the need of replacing all end terminals in the field, a brief summary of various exemplary embodiments, which add streaming capability (traditionally associated with video pump) to CDN edge caches, is presented.

Some simplifications and omissions may be made in the following summary, which is intended to highlight and introduce some aspects of the various exemplary embodiments, but not to limit its scope. Detailed descriptions of preferred exemplary embodiments adequate to allow those of ordinary skill in the art to make and use the invention concepts will follow in later sections.

The present invention is well suited for servicing legacy end terminals, thin clients included. A thin client is a general term for computing devices that rely on centralised or network-based resources to operate. A legacy example of thin clients is the dumb terminal, which displayed text driven applications served by mainframe computers. A thin client has reduced or no local storage and reduced processing resources. In the context of this invention, thin clients refers to clients terminals with limited resources such as terminal for which a simple software upgrade to support HAS is often not possible as discussed above.

The present invention is applicable to Internet and online CDNs.

The present invention makes use of the adaptive streaming delivery techniques (e.g. session-less, client-driven HAS protocol for control) and the unidirectional delivery of the requested media segments (e.g. sending segments via unicast such as UDP), and adds rate pacing at the delivery server for fairer allocation of bandwidth during delivery to multi-device home.

According to an aspect of the invention a method is provided for multimedia content delivering in CDNs which uses adaptive streaming according to claim 1. Another aspect of the invention relates to a system for media content delivery which is a telecommunications network of any known network topology (e.g. ring, mesh, etc.) comprising at least one end user terminal and a delivery server defined in claim 5.

These and other aspects of the invention will be apparent from and elucidated with reference to the embodiments described hereinafter.

The presented embodiments potentially have the following advantages when compared with the prior art:
- Slow start of data transmission over bi-directional communication channel, e.g. TCP slow start, is removed by allowing the delivery server to set fast start-up pace to send first segments/objects.
- Faster initial segment acquisition also leads to reduce latency and improve experience (QoE) to the comparable level with broadcast, IPTV or cable systems.
- Fairer arbitration of available BW during delivery to multi-device home ensuring that devices with larger screens get proportional QoE experience. Rate pacing at the delivery server enables better arbitration of rate selection during delivery to multi-device home and grants larger screens to get bigger proportion of available BW.
- The requirement of prior art solutions which need to duplicate the delivery chain in order to introduce HAS technology is removed. Adaptive streaming clients available on retail connected devices can be leveraged and also the use of HAS delivery and clients on legacy devices with smaller buffers is enabled. This is achieved by delivering multimedia close to the decoding/presentation time. And very thin end devices can be used with just a software upgrade. This enables HAS delivery for a broad population of legacy devices avoiding full device swap.
- No legacy protocols such as RTSP are required. If NAT is used at home, for example, at the home gateway (HG), traditional approach can be used such as application level gateways.
- Saving in operational effort of generating content in two formats at the origin. Since content is present in the whole platform in a single common format (HAS format), this saves core network usage (BW is saved in the core network because content is propagated just once), equipment and storage, and operational costs at all levels.
- Saving in equipment (video servers). Video pump functionality can be seamlessly integrated into the edge caches, which leads to homogeneous cache deployments.
- Transparent to the implementation of trick modes such as fast forward, rewind, seek and pause. Trick modes can be implemented at the client side using extra streams in the HAS set.
- Transparent to Digital Rights Management (DRM), since content can be pre-encrypted at the origin before segmenting, or alternatively segmented before being encrypted. Existing Conditional access systems (CAS) can be fully leveraged because the segmented UPD flow is transport stream based (e.g. MPEG TS is used for Apple HLS), which caters for conditional access information by carrying the CAS messages: Entitlement Management Message (EMM) and Entitlement Control Message (ECM).

### BRIEF DESCRIPTION OF THE DRAWINGS

Some embodiments of the method, system and device in accordance with embodiments of the present invention are now described, by way of example only, and with reference to the accompanying drawings, in which:
Figure 1 shows a system for multimedia delivery in a CDN using HAS according to prior art.
Figure 2 shows a block diagram of system architecture for content delivering with adaptive streaming via Content Delivery Network, according to an embodiment of the present invention.
Figure 3 shows a block diagram of the delivery server and end terminals of the system shown in Figure 2, according to an embodiment of the present invention.
Figure 4 shows a schematic diagram of the main steps and message flow for delivering media content in the system shown in Figure 2, according to an embodiment of the present invention.

Throughout the figures like reference numerals refer to like elements.

### DESCRIPTION OF EMBODIMENTS

The present inventions may be embodied in other specific devices, system and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

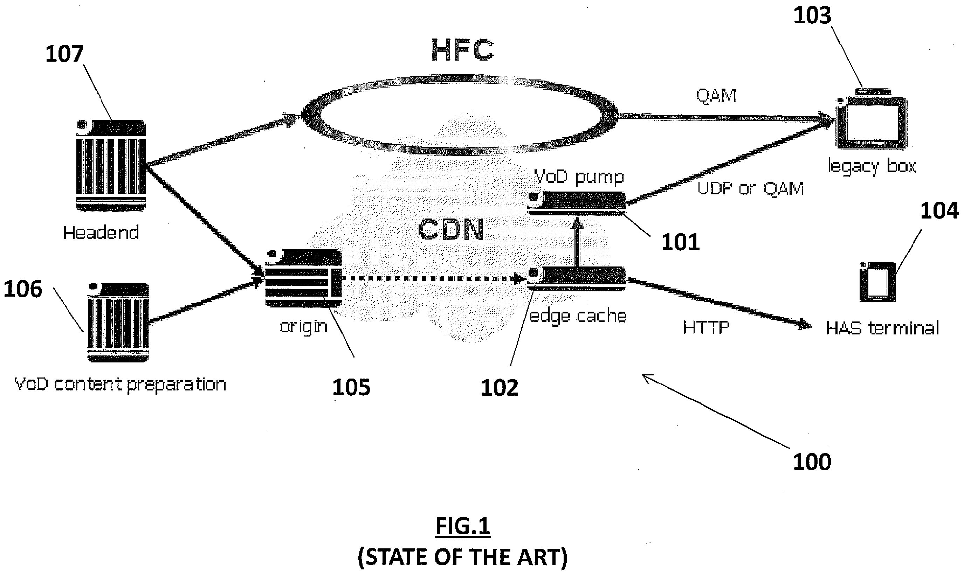

Figure 1 shows an example of a prior-art embodiment implemented by Alcatel-Lucent for propagating Video on Demand content through a Content Delivery Network (CDN) by using video pump servers (101) that streams video over UDP or digital video broadcasting which uses QAM to the legacy devices (103) of the viewers on request. The video pump servers (101) are introduced in the edge of the CDN, but separated with respect to the CDN edge cache (102) or delivery server, which uses HTTP to stream video to the HAS enabled terminals (104). This achieves the coexistence of the CDN using HAS and the old network of legacy devices (103) connected to the coaxial (HFC) and still capable of receiving QAM signals from the cable television headend (106). Thus, in this existing system (100), a separate network for the propagation of VoD content to video servers is not required but, nonetheless, the handicap is that the video content still needs to be prepared by a VoD content preparation server (107) and propagated twice from the content origin servers (105): once for video video pump servers (101) and separately for HAS enabled terminals (104). Therefore, this existing solution is not applicable to live channels, e.g., linear TV channels, which still need to use multicast. Besides, although legacy thin devices (103) can be used, VoD pumps are still required as separated video servers (101) in the edge of the CDN.

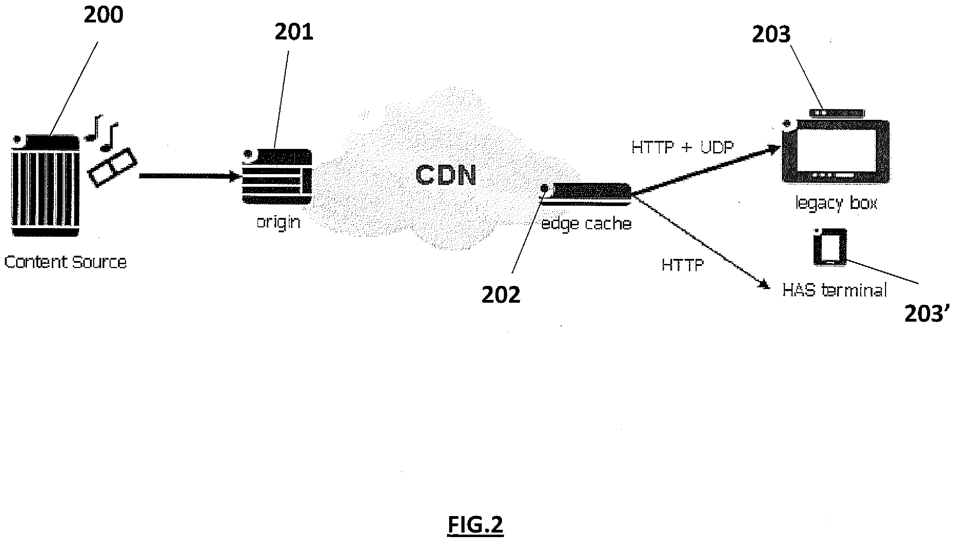

Figure 2 shows an embodiment of the system architecture for multimedia content delivering in CDNs which uses the edge nodes as both UDP and HTTP adaptive streamers. In this system, multimedia content from the content source (200), e.g. music and/or video service provider, is available in HAS format, e.g. MPEG2TS based such as HLS or DASH, and it is propagated using a content delivery network (CDN) from an origin server (201). At the edge of the CDN, the delivery server (202) includes caching means and unidirectional streaming means, e.g., a video pump engine, capable of delivering media objects over UDP at a specific pace by traffic shaping means. At the user end, a modified HAS client is included in the end terminals, both legacy devices (203) and adaptive streaming enabled terminals (203'), which works exactly as a normal HAS terminal, except that it specifies a UDP port, e.g. using a special HTTP header, when requesting a media segment of the HAS object. When a HAS video segment is to be delivered to a legacy devices (203), the delivery server (202) does not send it in the HTTP response body. Instead, it is sent through UDP, on the requested port, at a pace that matches the video segment internal timing. Consecutive responses to the same client, that is, requested through the same TCP connection, are pipelined at the cache UDP output of the delivery server (202), thus producing a steady MPEG2TS video bitstream at its output. The end terminal feeds the UDP input to its chipset decoder, exactly as it did with the legacy VoD model.

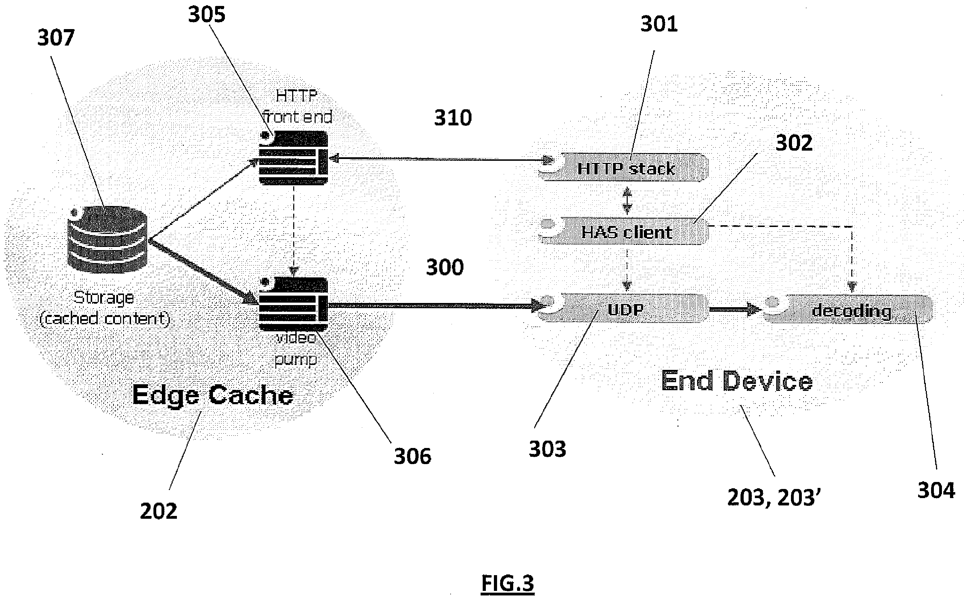

Figure 3 shows in detail an embodiment of the delivery server (202) and end terminals (203, 203') of the above described system. All end terminals, either legacy devices (203) including thin end devices with very little buffering capability or adaptive streaming enabled terminals (203'), comprise an HTTP stack (301) and an adaptive streaming client (302) over unidirectional transport protocol (303), i.e., UDP. The proposed system includes a set of features different to the prior-art adaptive HTTP delivery:
- A special feature is added to the HTTP stack (301) to enable unidirectional delivery, e.g. UDP transmission, of the HTTP requests (310) through a special HTTP request header that includes port number for the delivery server (202) to send unicast stream to. The adaptive streaming client (302) is implemented in any end terminal (203, 203') and uses the existing, or added, HTTP stack (301) to issue the manifest file and segment requests to the delivery server (202) in the CDN, and to get the responses. For example, as a normal HAS device, the adaptive streaming client (302) can get manifest URL from a middleware application, request and download manifest, and sub-manifests, if applicable, select a bitrate and request the download of the first segment.
- HTTP requests (310) and the corresponding HTTP responses can be sent via TCP/IP connection between the adaptive streaming client (302) and the delivery server (202). For this function, the delivery server (202) comprises a HTTP front end (305) communicated with the HTTP stack (301) of the end terminals (203, 203'). Furtermore, the delivery server (202) obtains the actual requested media segments from storage means, i.e., the cached content, and delivers said requested media segments by means of a unidirectional streamer (306), e.g. UDP streamer, at the port specified in the request by the end terminals (203, 203'). Thus, a constant flow of HTTP requests (310) from the adaptive streaming client (302) produces a steady UDP flow (300) at the delivery server (202) to the address of the end terminals (203, 203') at the specified port. The UDP flow (300) of requested media segments are decoded at the end terminals (203, 203') by decoding means (304) also used by the adaptive streaming client (302) to extract the media objects from the HAS format.
- The delivery server (202) paces the delivery of requested media segments, the UDP flow (300), based on a set of conditions that may include, but not limited to, the following network and/or user parameters:
   - multimedia traffic rate requested by the user,
   - encoded bit-rate, e.g., PCRs rate,
   - predicted or measured network BW/network load,
   - service level agreement,
   - other streams delivered to the IP address of home gateway,
   - end terminal (203, 203') capabilities such as screen size, buffer size or other terminal capabilities which can either be included into the request by the adaptive streaming client (302) or acquires/pre-provisioned at the delivery server (202).

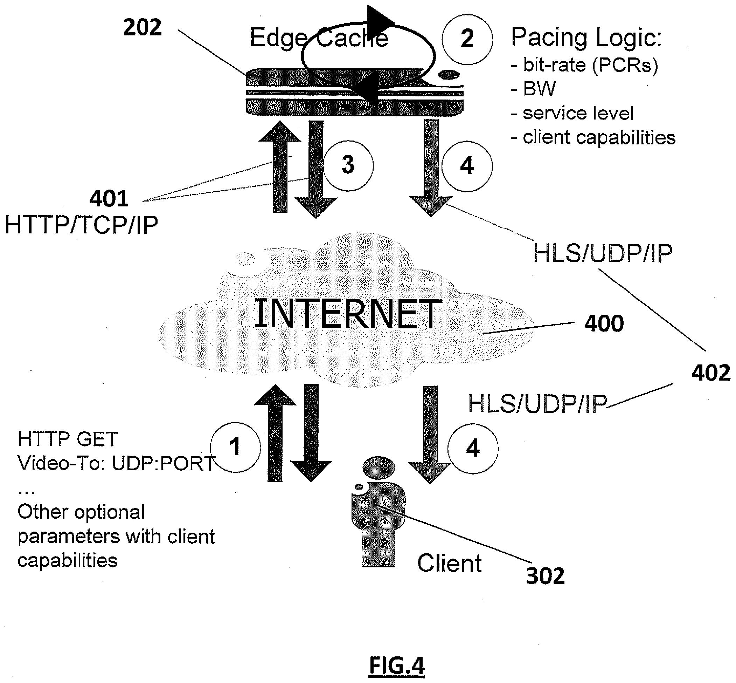

Figure 4 shows an embodiment of the logical flow between the delivery server (202) and the adaptive streaming client (302) of the end terminals (203, 203') described above, comprising the following steps:
- Step 1: sending a request for content (1) from the adaptive streaming client (302). Typically, HTTP adaptive streaming client (302) uses HTTP GET, which is issued to request segment by segment of the content, and a HTTP GET request is issued for the next segment only once the completer previous segment was received. The content request further comprises an indication to the delivery server (202), e.g., through a special HTTP request header, indicating that unidirectional delivery can be received at the user end. This indication includes a port number, e.g., an UDP port, to which the delivery server (202) is enabled to send requested media objects. In addition, when requesting segments or media objects, the adaptive streaming client (302) optionally can mandate the HTTP stack to include optional parameters indicating device capabilities of the end terminal (203, 203'). For example, a special HTTP header: "Video-To:" can be included in the request, and the value of said additional HTTP header can be an IP address or a URL, specifying accurately where video segments should be sent to, e.g.: "Video-To: udp://10.20.30.40:8280" or "Video-To: rtp://1.2.3.4:2222". The requests and the corresponding responses can be sent through Internet (400) using HTTP and over a TCP/IP connection (401). TCP/IP connection (401) may be kept open, and requests for consecutive segments may be pipelined through it.
- Step 2: the delivery server (202) applies pacing logic to determine a pacing rate (2) to deliver adaptive segments. This logic may include network parameters such as requested rate, encoded bitrate, number of streams to the home gateway IP address, service level agreement, and network state, among others, and client capabilities. The delivery server may re-evaluate the initially determined pacing rate and change the pace during the delivery.
- Step 3: the delivery server (202) sends a first response (3) and, if confirming that the requested content will be sent to the destination port specified in the request, may optionally indicate a selected pacing rate at which the delivery is going to be carried out and goes to step 4: the delivery of media objects.
- Step 4 the delivery server (202) sends media objects (4) through Internet (400) towards the user end, over a unidirectional streaming delivery protocol, e.g., UDP, to the destination port of the end terminal (203, 203') specified in the request by the adaptive streaming client (302). For example, when a "Video-To:" header is detected, an HTTP response "200 OK" may be sent by the delivery server (202) in response to HTTP GET. Then the delivery server (202) checks:
   - If the segment or media object to be sent is not present in the cache of the delivery server (202), it requests the segment to a higher level cache in the hierarchy of edge caches in the Content Delivery Network (CDN). This is the standard CDN behaviour, nothing special needs to be done.
   - If the segment is available because is cached in the delivery server (202) or has been obtained from another cache, the delivery server (202) applies pacing rate determined above, or uses default pacing determined from internal timestamps of the segment to pace the UDP output, and starts the delivery of the segment using the unidirectional streaming protocol, e.g., UDP, to the destination address and port, which are extracted from the HTTP "Video-To" header of the HTTP request. This is performed by means of a unidirectional, UDP, streamer (306), which serves as a video pump. The delivery server (202) has buffering means at its delivery output, server side buffering, and when a segment has completely been buffered, its sending is considered complete by the cache, although data can still be output by the pump or streamer (306) for a while. After HTTP "200 OK" message is sent as HTTP response by the delivery server (202) to the end terminal (203, 203'), the latter considers that the segment is ready and can issue the next request of segment. If the request for the next segment arrives before the pump output buffer has been emptied, data from the new segment is appended to the same buffer. As a result, the output of the delivery server (202) becomes a steady unidirectional flow even across segments. This segmented unidirectional output is transport stream based, for example, using HTTP Live Streaming. The cache of the delivery server (202) knows that different segment requests belong to the same "session" because the HTTP requests arrive through the same TCP connection (401), which is not closed by the end terminal (203, 203') between segments. The steady flow over the UDP/IP connection (402) can use UDP destination address which may be multicast and, in this case, a single end terminal (203, 203') may produce the sending of data to multiple end terminals (203, 203') which just listen to the same multicast address.

The delivery server (202) may periodically re-evaluate pacing rate repeating steps 2, 3, 4 and adjust said delivery rate if, for example, one of the evaluation criterions, e.g., requested rate, encoded bitrate, etc., change.

A person of skill in the art would readily recognize that steps of various above-described methods can be performed by programmed computers.

Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention as defined in the claims. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A method for multimedia content delivery using HTTP adaptive streaming, comprising sending requests for media objects from an end terminal (203, 203') to a delivery server (202) of a content delivery network (CDN), further comprising:
- sending an indication within a request for media objects, from the end terminal (203, 203') to the delivery server (202), of a port number at which unidirectional streaming of media objects can be received in the end terminal (203, 203'),
- sending requests for media objects to the delivery server (202) and receiving responses from the delivery server (202) by an adaptive streaming client (302) using HTTP adaptive streaming implemented in the end terminal (203, 203'),
- receiving the requested media objects at the indicated port number from a unidirectional streamer (306) of the delivery server (202) through a unidirectional transport protocol (303) used by the adaptive streaming client (302),
- determining by the delivery server (202), based on evaluation criteria, a pacing rate (2) at which the requested media objects are sent from the unidirectional streamer (306), wherein the evaluation criteria applied by the delivery server (202) to determine the pacing rate (2) comprises the following evaluation criteria:
- evaluation criteria based on device capabilities of the end terminal (203, 203') sent by the adaptive streaming client (302), within the request for media objects, and
- evaluation criteria based on measured network parameters;
- buffering together by the delivery server (202) all the requested media objects to be delivered to the same indicated port number;
- applying by the delivery server (202) the determined pacing rate (2) to deliver the buffered media objects to the adaptive streaming client (302) from the unidirectional streamer (306) using the unidirectional transport protocol (303).

2. The method for multimedia content delivery according to claim 1, wherein the unidirectional transport protocol (303) is UDP.

3. The method for multimedia content delivery according to any previous claim, wherein the port number specifies a multicast address.

4. The method for multimedia content delivery according to any previous claim, wherein the pacing rate (2) is adjusted whenever any of the evaluation criteria changes.

5. A system for multimedia content delivery using HTTP adaptive streaming, comprising at least an end terminal (203, 203') sending requests for media objects to a delivery server (202) of a content delivery network (CDN), wherein:
- the end terminal (203, 203') comprises:
- an HTTP stack (301) to indicate to the delivery server (202), within a request for media objects, a port number at which unidirectional streaming of media objects can be received in the end terminal (203, 203'),
- an adaptive streaming client (302) which uses the HTTP stack (301) to send requests for media objects to the delivery server (202) and to receive responses from the delivery server (202),
- unidirectional transport protocol (303) used by the adaptive streaming client (302) to receive the requested media objects at the indicated port number;
- the delivery server (202) comprises:
- a HTTP front end (305) communicated with the HTTP stack (301) of the end terminal (203, 203') to send responses in reply to the request for media objects,
- a unidirectional streamer (306) to send the requested media objects to the port number indicated in the request to the end terminal (203, 203')
- pacing logic means to determine a pacing rate (2) at which the requested media objects are sent from the unidirectional streamer (306) based on evaluation criteria comprising:
- evaluation criteria based on device capabilities of the end terminal (203, 203') sent by the adaptive streaming client (302), within the request for media objects, and
- evaluation criteria based on measured network parameters;
- buffering means input to the unidirectional streamer (306) for buffering together all the requested media objects to be delivered to the same indicated port number at the adaptive streaming client (302) from the unidirectional streamer (306) using the unidirectional transport protocol (303) and applying the determined pacing rate (2).

6. The system for multimedia content delivery according to claim 5, wherein the end terminal (203, 203') is a legacy device (203) or an adaptive streaming enabled terminal (203').

## Patentansprüche

1. Verfahren zur Bereitstellung von Multimediainhalten unter Verwendung von HTTP Adaptive Streaming, das Senden von Anforderungen für Mediaobjekte von einem Endgerät (203, 203') an einen Zustellserver (202) eines Inhaltsbereitstellungsnetzes (Content Delivery Network, CDN) umfassend, weiterhin umfassend:
- das Senden einer in einer Anforderung für Mediaobjekte enthaltenen Indikation einer Portnummer vom Endgerät (203, 203') an den Zustellserver (202), unter welcher unidirektionales Streaming von Mediaobjekten in dem Endgerät (203, 203') empfangen werden kann,
- das Senden von Anforderungen für Mediaobjekte an den Zustellserver (202) und den Empfang von Antworten von dem Zustellserver (202) durch einen Client (302) für adaptives Streaming unter Verwendung von HTTP Adaptive Streaming, implementiert in das Endgerät (203, 203'),
- den Empfang der angeforderten Mediaobjekte an der angegebenen Portnummer von einem unidirektionalen Streamer (306) des Zustellservers (202) durch ein unidirektionales Transportprotokoll (303), welches von dem Client (302) für adaptives Streaming verwendet wird,
- das durch den Zustellserver (202) auf der Grundlage von Evaluierungskriterien erfolgende Bestimmen einer Pacing-Rate (2), mit welcher die angeforderten Mediaobjekte von dem unidirektionalen Streamer (306) gesendet werden, wobei die vom Zustellserver (202) zum Bestimmen der Pacing-Rate (2) angewendeten Evaluierungskriterien die folgenden Evaluierungskriterien umfassen:
- Evaluierungskriterien auf der Grundlage von Geräteressourcen des Endgeräts (203, 203'), die vom Client (302) für adaptives Streaming in der Anforderung von Mediaobjekten gesendet werden, und
- Evaluierungskriterien auf der Grundlage gemessener Netzwerkparameter;
- das durch den Zustellserver (202) erfolgende, gemeinsame Puffern aller angeforderten Mediaobjekte, die an dieselbe angegebene Portnummer zu liefern sind;
- das durch den Zustellserver (202) erfolgende Anwenden der bestimmten Pacing-Rate (2) zur Bereitstellung der gepufferten Mediaobjekte von dem unidirektionalen Streamer (306) an den Client (302) für adaptives Streaming unter Verwendung des unidirektionalen Transportprotokolls (303).

2. Das Verfahren zur Bereitstellung von Multimediainhalten nach Anspruch 1, wobei das unidirektionalen Transportprotokoll (303) UDP ist.

3. Das Verfahren zur Bereitstellung von Multimediainhalten nach einem jeglichen der vorgenannten Ansprüche, wobei die Portnummer eine Multicastadresse spezifiziert.

4. Das Verfahren zur Bereitstellung von Multimediainhalten nach einem jeglichen der vorgenannten Ansprüche, wobei die Pacing-Rate (2) immer dann angepasst wird, wenn sich eines der Evaluierungskriterien ändert.

5. System zur Bereitstellung von Multimediainhalten unter Verwendung von HTTP Adaptive Streaming, mindestens ein Endgerät (203, 203') umfassend, das Anforderungen von Mediaobjekten an einen Zustellserver (202) eines Inhaltsbereitstellungsnetzes (Content Delivery Network, CDN) sendet, wobei:
- das Endgerät (203, 203') umfasst:
- einen HTTP-Stapel (301), um dem Zustellserver (202) in einer Anfrage nach Mediaobjekten eine Portnummer anzuzeigen, unter welcher unidirektionales Streaming von Mediaobjekten von dem Endgerät (203, 203') empfangen werden kann,
- Client (302) für adaptives Streaming, der den HTTP-Stapel (301) benutzt, um Anforderungen nach Mediaobjekten an den Zustellserver (202) zu senden und um Antworten von dem Zustellserver (202) zu empfangen,
- unidirektionales Transportprotokoll (303) das von dem Client (302) für adaptives Streaming dazu verwendet wird, um die angeforderten Mediaobjekte unter der angegebenen Portnummer zu empfangen;
- der Zustellserver (202) umfasst:
- ein HTTP Frontend (305), verbunden mit dem HTTP-Stapel (301) des Endgeräts (203, 203') zum Senden von Antworten auf die Anforderungen nach Mediaobjekten hin,
- Unidirektionaler Streamer (306), um die angeforderten Mediaobjekte an die in der Anfrage angegebene Portnummer des Endgeräts (203, 203') zu senden,
- Pacinglogik-Mittel für das Bestimmen einer Pacing-Rate (2), mit welcher die angeforderten Mediaobjekte von dem unidirektionalen Streamer (306) gesendet werden, wobei das Bestimmen auf der Grundlage von Evaluierungskriterien erfolgt, die Folgenden umfassend:
- Evaluierungskriterien auf der Grundlage von Geräteressourcen des Endgeräts (203, 203'), die vom Client (302) für adaptives Streaming in der Anforderung von Mediaobjekten gesendet werden, und
- Evaluierungskriterien auf der Grundlage gemessener Netzwerkparameter;
- Input von Puffermitteln für den unidirektionalen Streamer (306) zum gemeinsamen Puffern von all denjenigen von dem unidirektionalen Streamer (306) angeforderten Mediaobjekten, die derselben angegebenen Portnummer bereitzustellen sind, an dem Client (302) für adaptives Streaming unter Verwendung des unidirektionalen Transportprotokolls (303) und unter Anwendung der bestimmten Pacing-Rate (2).

6. Das System zur Bereitstellung von Multimediainhalten nach Anspruch 5, wobei das Endgerät (203, 203') ein altes Gerät (203) oder ein für adaptives Streaming ausgelegtes Endgerät (203') ist.

## Revendications

1. Procédé pour la diffusion de contenu multimédia utilisant la lecture en continu adaptative HTTP, comprenant l'envoi de demandes d'objets média d'un terminal d'extrémité (203, 203') à un serveur de diffusion (202) d'un réseau de diffusion de contenu (CDN), comprenant en outre les étapes suivantes :
- envoyer une indication à l'intérieur d'une demande d'objets média, du terminal d'extrémité (203, 203') au serveur de diffusion (202), d'un numéro de port auquel la lecture en continu unidirectionnelle d'objets média peut être reçue dans le terminal d'extrémité (203, 203'),
- envoyer des demandes d'objets média au serveur de diffusion (202) et recevoir des réponses du serveur de diffusion (202) par un client de lecture en continu adaptative (302) utilisant la lecture en continu adaptative HTTP mise en oeuvre dans le terminal d'extrémité (203, 203'),
- recevoir les objets média demandés au niveau du numéro de port indiqué en provenance d'un lecteur en continu unidirectionnel (306) du serveur de diffusion (202) par l'intermédiaire d'un protocole de transport unidirectionnel (303) utilisé par le client de lecture en continu adaptative (302),
- déterminer par le serveur de diffusion (202), sur la base de critères d'évaluation, un débit de cadencement (2) auquel les objets média demandés sont envoyés depuis le lecteur en continu unidirectionnel (306), les critères d'évaluation appliqués par le serveur de diffusion (202) pour déterminer le débit de cadencement (2) comprenant les critères d'évaluation suivants :
- des critères d'évaluation basés sur des capacités de dispositif du terminal d'extrémité (203, 203') envoyées par le client de lecture en continu adaptative (302), à l'intérieur de la demande d'objets média, et
- des critères d'évaluation basés sur des paramètres de réseau mesurés ;
- tamponner ensemble par le serveur de diffusion (202) tous les objets média demandés devant être diffusés au même numéro de port indiqué ;
- appliquer par le serveur de diffusion (202) le débit de cadencement déterminé (2) pour diffuser les objets média tamponnés au client de lecture en continu adaptative (302) à partir du lecteur en continu unidirectionnel (306) utilisant le protocole de transport unidirectionnel (303).

2. Procédé pour la diffusion de contenu multimédia selon la revendication 1, dans lequel le protocole de transport unidirectionnel (303) est UDP.

3. Procédé pour la diffusion de contenu multimédia selon l'une quelconque des revendications précédentes, dans lequel le numéro de port spécifie une adresse de multidiffusion.

4. Procédé pour la diffusion de contenu multimédia selon l'une quelconque des revendications précédentes, dans lequel le débit de cadencement (2) est ajusté chaque fois que l'un quelconque des critères d'évaluation change.

5. Système pour la diffusion de contenu multimédia utilisant la lecture en continu adaptative HTTP, comprenant au moins un terminal d'extrémité (203, 203') envoyant des demandes d'objets média à un serveur de diffusion (202) d'un réseau de diffusion de contenu (CDN), dans lequel:
- le terminal d'extrémité (203, 203') comprend :
- une pile HTTP (301) pour indiquer au serveur de diffusion (202), à l'intérieur d'une demande d'objets média, un numéro de port auquel la lecture en continu unidirectionnelle d'objets média peut être reçue dans le terminal d'extrémité (203, 203'),
- un client de lecture en continu adaptative (302) qui utilise la pile HTTP (301) pour envoyer des demandes d'objets média au serveur de diffusion (202) et pour recevoir des réponses du serveur de diffusion (202),
- un protocole de transport unidirectionnel (303) utilisé par le client de lecture en continu adaptative (302) pour recevoir les objets média demandés au niveau du numéro de port indiqué ;
- le serveur de diffusion (202) comprend :
- une extrémité frontale HTTP (305) communiquée avec la pile HTTP (301) du terminal d'extrémité (203, 203') pour envoyer des réponses en réponse à la demande d'objets média,
- un lecteur en continu unidirectionnel (306) pour envoyer les objets média demandés au numéro de port indiqué dans la demande au terminal d'extrémité (203, 203')
- des moyens de logique de cadencement pour déterminer un débit de cadencement (2) auquel les objets média demandés sont envoyés à partir du lecteur en continu unidirectionnel (306) sur la base de critères d'évaluation comprenant :
- des critères d'évaluation basés sur des capacités de dispositif du terminal d'extrémité (203, 203') envoyées par le client de lecture en continu adaptative (302), à l'intérieur de la demande d'objets média, et
- des critères d'évaluation basés sur des paramètres de réseau mesurés
- des moyens de tamponnage entrés dans le lecteur en continu unidirectionnel (306) pour tamponner ensemble tous les objets média demandés devant être diffusés au même numéro de port indiqué au niveau du client de lecture en continu adaptative (302) à partir du lecteur en continu unidirectionnel (306) utilisant le protocole de transport unidirectionnel (303) et appliquer le débit de cadencement déterminé (2).

6. Système pour la diffusion de contenu multimédia selon la revendication 5, dans lequel le terminal d'extrémité (203, 203') est un dispositif hérité (203) ou un terminal adapté à la lecture en continu adaptative (203').
